# EUROPEAN PATENT APPLICATION

(11) **EP 1 339 185 A1**
(43) Date of publication of application: **27.08.2003**
(21) Application number: 02291992.2
(22) Date of filing: 08.08.2002
(51) Int. Cl.: H04J 3/16

(54) **Method for providing flow control of Ethernet frames transported over a transport SDH/SONET network**

(30) Priority: 22.02.2002 EP 02290445
(71) Applicant: ALCATEL, 75008 Paris (FR)
(72) Inventor: Brusamolino, Vittorio, 20060 Pozzo d'Adda (Milano) (IT); Panonzini, Massimo, 20059 Vimercate (Milano) (IT); Scottini, Stefano, 38068 Rovereto (Trento) (IT); Taina, Paolo, 20059 Vimercate (Milano) (IT); Rutar, Massimiliano, 20040 Carnate (Milano) (IT); Terenziani, Marco, 46100 Mantova (IT)
(74) Representative: Lamoureux, Bernard

(57) **Abstract**

Disclosed is a method for providing flow control of Ethernet frames transported over a transport SDH/SONET network. The method is characterized by comprising the following steps: at the network elements that host the sending and receiving points, providing termination blocks for storing queues of Ethernet frames, when the filling of termination block queue at the receiving node reaches a danger threshold, generating a Link Back-pressure Request and forwarding it to termination block at the transmitting node along the opposite direction; upon receipt of this request at the termination block suspending the transmission of other already stored Ethernet frames by until the disappearance of the Link Back-pressure Request.

## Description

The present invention relates to the telecommunication field and in particular to the transport of Ethernet frames over a SDH/SONET network. Still more in particular, the present invention relates to a method and network element providing flow control of Ethernet traffic over the SDH/SONET network.

As it is known, traffic generated by an Ethernet apparatus is characterized by discontinuities, namely there are periods with a more or less constant sending rate of Ethernet packets and periods during which a rather long time is provided between a received Ethernet frame and the next one. Such unstable/inconstant traffic is generally termed "bursty". On the contrary, SDH or SONET traffic is characterized by a constant sending/receiving rate. In other words, any network element of a transport SDH/SONET network sends corresponding frames with a regular and constant rate. Furthermore, Ethernet frames do not have a fixed length/size but only a maximum size (1518 bytes).

It is easy to understand that these discrepancies result in a highly difficult interfacing of two technologies having different natures/characteristics.

An already available solution to the above problem allows the mapping of Ethernet frames into SDH/SONET Virtual Containers as a transparent tributary; all incoming bits are transported to the output interface with the related timing information (frequency for recovering the proper bit rate at the reception side). Within the SDH/SONET payload also the dead times between a received Ethernet frame and the following one are mapped.

The general problem of transporting Ethernet frames over a SONET/SDH transport network is presently solved through SONET/SDH virtual concatenation. Ethernet frame transport is performed according to the following main steps: the bytes of one frame are distributed among all the available SDH/SONET Virtual Containers, namely, the first frame byte is mapped in the first VC, the second frame byte is mapped in the second VC and so on; due to the fact that SDH/SONET Virtual Containers can follow different paths, at the ending point, the Virtual Containers should be re-aligned; and the bytes of the Ethernet frames are extracted from the re-aligned Virtual Containers and the frame is finally re-assembled.

At present, when Ethernet traffic is transported over SDH/SONET networks, some queues of Ethernet frames are required; the problem to solve is how to manage the traffic flow in order to avoid the overflow of every queue.

The simple but extremely inefective solution to this problem is to discarge one or more Ethernet frames upon the occurrence of the overflow of a queue. Clearly, such a solution is unacceptable because some traffic is lost.

The above problem could become even worst when there is a fault of the SDH/SONET Virtual Containers transporting the Ethernet frames. At present, faults are managed according to the relevant SDH/SONET Recommendations but, in many case, a fault affecting a Virtual Container assigned to the transport of Ethernet frames leads to a complete loss of the traffic.

In view of the above main problem, the general object of the present invention is overcoming it in an efficient manner.

The main scope of the present invention is providing a method and network element for providing a flow control of Ethernet traffic over SDH/SONET networks. The flow control feature is particularly advantageous when the network capacity is reduced because of a fault of one or more VCs.

An additional scope of the present invention is providing such a method that could be implemented in hardware.

The above and further objects of the present invention are obtained by a method according to claim 1. Further advantageous features of the present invention are set forth in dependent claims. All the claims should be considered as an integral part of the present description.

The basic idea of the proposed solution is to provide a layered flow control, with a flow control at Link/Circuit level being performed by means of proper Back-pressure Request messages issued by the receiving termination block whose stored frame queue has reached a danger (too high) level and a pure Ethernet flow control (PAUSE control frame) being activated in response to the activation of flow control at Link/Circuit level. Every Circuit has a dedicated flow control and every Link has a dedicated flow control. Circuit and Link flow controls work in a concurrent and independent way although the filling of a Link queue could lead to Circuit flow control activation. The PAUSE control frame is generated compliantly with IEEE 802.3.

The present invention operates through a new layer/network which is provided over the SDH/SONET network in order to manage the transport of Ethernet traffic over SDH/SONET network; this new layer/network uses the resources of SDH/SONET network in such a way as to optimize the provided services and the performances with reference to this specific type of transport. Such a new layer has been fully disclosed and claimed in a previous patent application (EP02290445.2) of the same applicant. The content of it is fully incorporated herewith as a reference.

The present invention will become clear in view of the following detailed description, to be read having reference to the attached sheets of drawings,
wherein:
- Fig. 1 shows the structure of a Virtual Private Network and relating circuits and it is similar to Fig. 1 of EP02290445.2;
- Figures 2.1 to 2.3 show how the NETS flow control at Link level could be performed in Network Elements #0, #3 and #2, respectively, for the Link from NE#0 to NE#2;
- Figures 3.1 to 3.3 show how the NETS flow control at Circuit level could be performed in Network Elements #0, #3 and #2, respectively, for the Link from NE#0 to NE#2; and
- Figures 4.1 to 4.3 show how the filling of CM queue in an intermediate node is managed when NETs flow control at Circuit level is implemented;
- Fig. 5 is similar to Fig. 1;
- Figures 6.1-6.3 show a detailed schematic of the VC-3 based Circuit of Fig. 5 connecting AP#0 and AP#2 in case of failure; and
- Figures 7.1-7.3 show a detailed schematic of the VC-12 based Circuit of Fig. 5 connecting AP#0 and AP#2 in case of failure.

As said above, the present invention operates in a layer/network which is termed NETS (i.e. Network of Ethernet Transport over SDH/SONET) and is disclosed in EP02290445.2 The NETS comprises basic elements that are listed below for a better comprehension of the present invention.

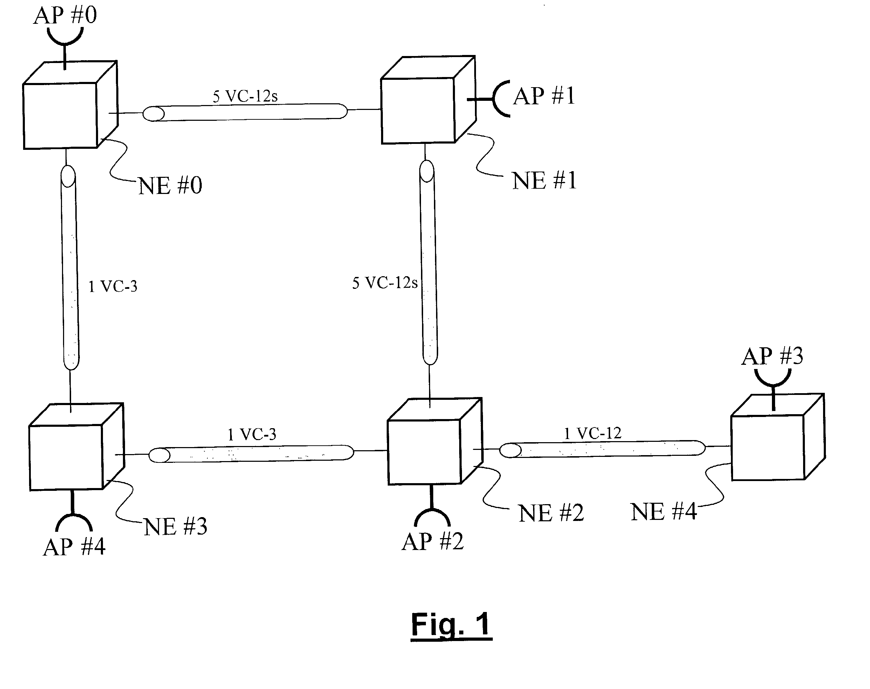

The NETS model comprises five basic elements: Access Point, Link, Circuit, Pipe and Path. An Access Point (AP) is an Ethernet interface at the boundary of an SDH/SONET network; it is the point where the Ethernet traffic can access/leave the SDH/SONET network. Fig. 1 depicts a simple example of network comprising five Network Elements (NE #0 to NE #4) with each network element having an Access Point: NE #0 has AP #0, NE #1 has AP #1, NE #2 has AP #2, NE #3 has AP #4 and finally NE #4 has AP #3. Naturally, a Network Element can host more than one Access Point.

A pair of Ethernet Access Points defines a point-to-point connection; this connection is named Link. For instance, with reference to Fig. 1, the pair AP #0 & AP #1 identifies a link; the pair AP #2 & AP #4 defines another link, and so on.

An SDH/SONET network could allow for the connection of two Access Points (i.e. to accomplish a Link) by means of different routes; every route is named Circuit. A Circuit is obtained by a Pipe concatenation and could be considered as a series connection of N Pipes.

In its turn, every Circuit/route that connects two Access Points can be divided into a sequence of smaller segments; every segment is named Pipe.

The basic pipeline is the Virtual Container that connects two Network Elements; it is named Path.

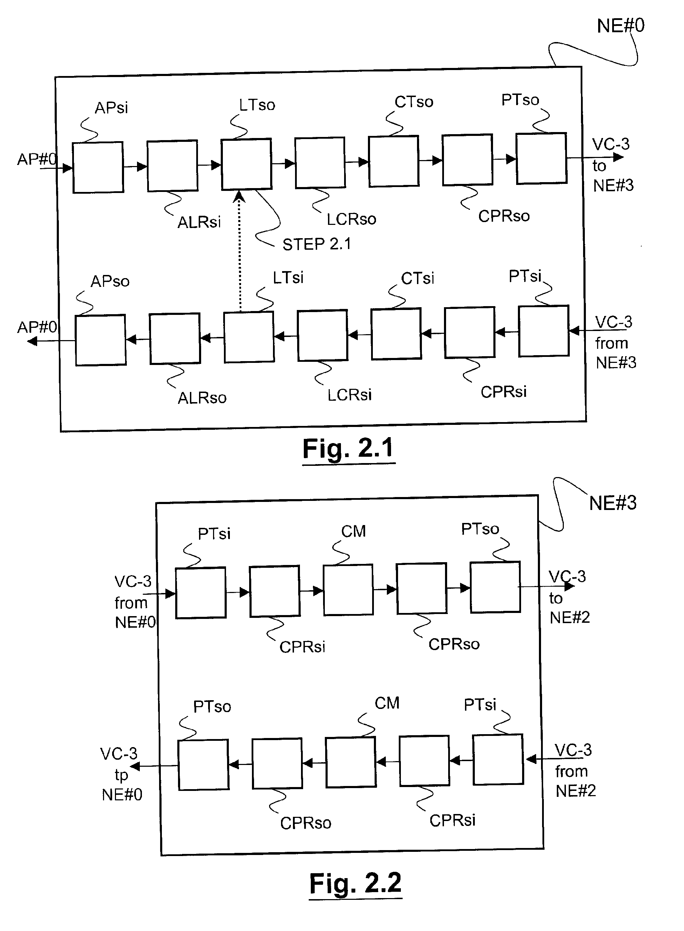

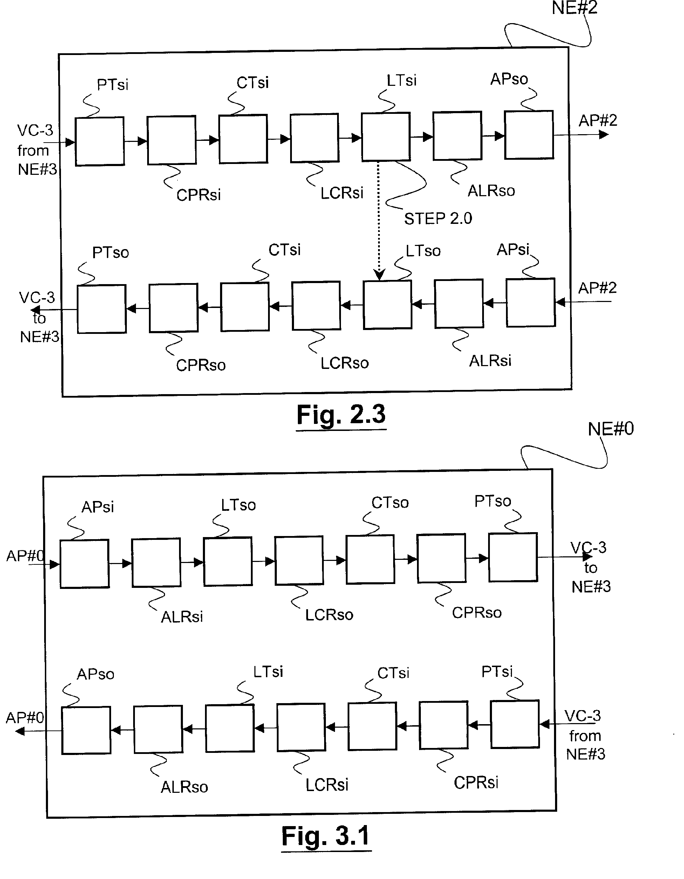

Figures 2.1, 2.2, 2.3 are connected one to each other and depict a detailed schematic of a selected exemplifying Circuit from Network Element #0 (see Fig. 2.1) to Network Element #2 (see Fig. 2.3), passing through Network Element #3 (see Fig. 2.2). In the various Figures, "si" stands for "sink", "so" stands for "source".

Network Element #0 (briefly, NE#0) comprises a number of blocks which could be divided into Termination blocks and Routing blocks. Termination blocks in NE#0 comprise: Access Point blocks APsi, APso, Link Termination blocks LTsi, LTso, Circuit Termination blocks CTsi, CTso and Path Termination blocks PTsi, PTso. Routing blocks in NE#0 comprise: Access Point-Link Routing blocks ALRsi, ALRso, Link-Circuit Routing blocks LCRsi, LCRso and Circuit-Path Routing blocks CPRsi, CPRso. APsi block receives Ethernet frames from AP#0 interface; Path Termination source block provides the frames to NE#3 by the VCs (path). Analogously, PTsi receives from NE#3 and finally APso provides the frames to AP#0 as output.

The Termination blocks manage all the information related to Access Points, Link, Circuits or Paths; the Routing blocks just provide the connection among the different types of Termination blocks.

The first scenario of NETS model which will be considered as first is the one of Link queues. Let suppose an exemplifying Link accomplishing a point-to-point connection between AP #0 and AP #2 of Fig. 1; every NE hosting one of these Access Points is equipped with a couple of LTso/LTsi blocks. Thus, in other words, Network Element NE#0, hosting AP#0 comprises LTso and LTsi blocks; Network Element NE#2, hosting AP#2 comprises LTso and LTsi blocks as well.

The intermediate Network Element (NE#3) just provides a Circuit Monitor CM and the cross-connection between the incoming and the outgoing Paths.

The LTso block of NE#0 stores all the Ethernet frames received by AP #0; the selected Circuit and Paths transport these frames over SDH network up to LTsi block of NE #2.

The LTsi block stores all the received frames and provides them to AP #2. LTso block still stores these frames until AP #2 can transmit them; the filling of LTsi queue is depending on the transmission capability of AP #2 and the amount of traffic received from LTso block.

Thus, the filling of Link Termination sink block LTsi queue is a critical parameter; an overflow condition could occur and result in a traffic loss.

According to the present invention, the solution to this problem could be the following:
STEP 2.0, Fig. 2.3: When the filling of LTsi queue reaches and/or goes over a "danger" threshold, a proper Link Back-pressure Request is generated and forwarded to LTso block along the opposite direction (from NE #2 to NE #0).
STEP 2.1, Fig. 2.1: Upon reception of this request, the LTso block suspends the transmission of other Ethernet frames until the disappearance of the request itself; the request disappears when the filling of LTsi queue falls under a "safety" threshold.

The same solution can be applied to Circuit queues too as described in the following.

Every time AP #2 transmits a frame stored in LTsi queue, the filling of LTsi queue decreases until it falls under a "safety" threshold; when this event occurs the Back-pressure Request is removed.

As a consequence of Back-pressure Request removal, LTso block enables the transmission of Ethernet frames again.

In such a way, the Ethernet traffic flow over SDH network is controlled in order to avoid any overflow and traffic loss.

As a consequence of a Link Back-pressure Request and the corresponding transmission disablement of LTso, also the filling of LTso queue could increase; as a matter of fact, the equipment connected to AP #0 does not stop its transmission.

Thus, preferably, when the filling of LTso queue reaches a "danger" threshold, a PAUSE control frame is generated (according to IEEE 802.3 Recommendation) and it is transmitted to the equipment connected to AP #0.

As a consequence of this PAUSE control frame, this equipment connected to AP #0 stops its transmission for a certain time interval.

This means that a sort of layered flow control is accomplished: the NETS flow control at Link level is performed by issuing a Link Back-pressure Request; furthermore, the activation of this NETS flow control could lead to the activation of the pure Ethernet flow control according to the related recommendation.

It should be noticed that this second step is not depicted in the various Figs 2 that just depict NETS flow control.

Thus, the Link scenario of NETS model is just related to the Network Elements that host AP #0 and AP #2; none action is performed in the intermediate node (NE #3). An approach similar to the one of Link scenario can be applied to Circuit scenario as well; the only difference is that a frame queue is foreseen in every Network Element of the Circuit and not only in the first and in the last one.

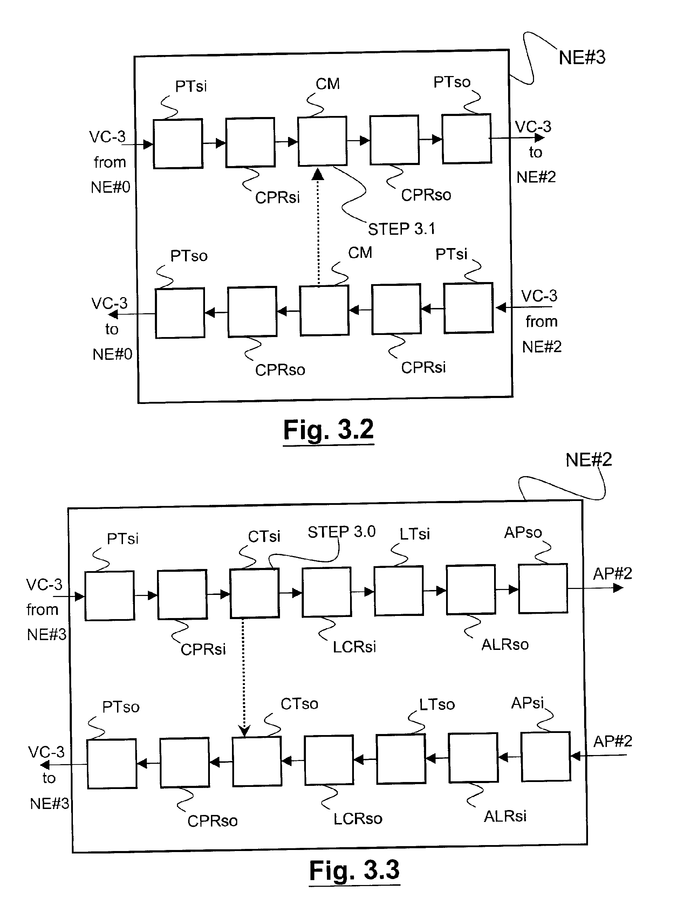

Reference should be made to Figures 3.1-3.3 for a better understanding of the scenario which will be described below in a rather detailed manner.

In NE #0, CTso block of stores the Ethernet frames received from LTso block until PTso block can transmit them. The frames are transmitted to NE#3.

In NE#3, CM block (direction from NE #0 to NE #2) stores the frames received from PTsi block until PTso block can transmit them.

Finally, in NE#2 (STEP 3.0), CTsi block stores the frames received from PTsi block until LTsi block can accept them. When the filling of CTsi queue reaches a "danger" threshold, a Circuit Back-pressure Request is generated and transmitted to CTso block.

The request finally arrives to CM block (direction from NE#2 to NE#0) of NE #3. This results in the disablement of CM transmission until the disappearance of the Request itself (STEP 3.1). This event occurs when the filling of CTsi queue (in NE#2) falls under a "safety" threshold.

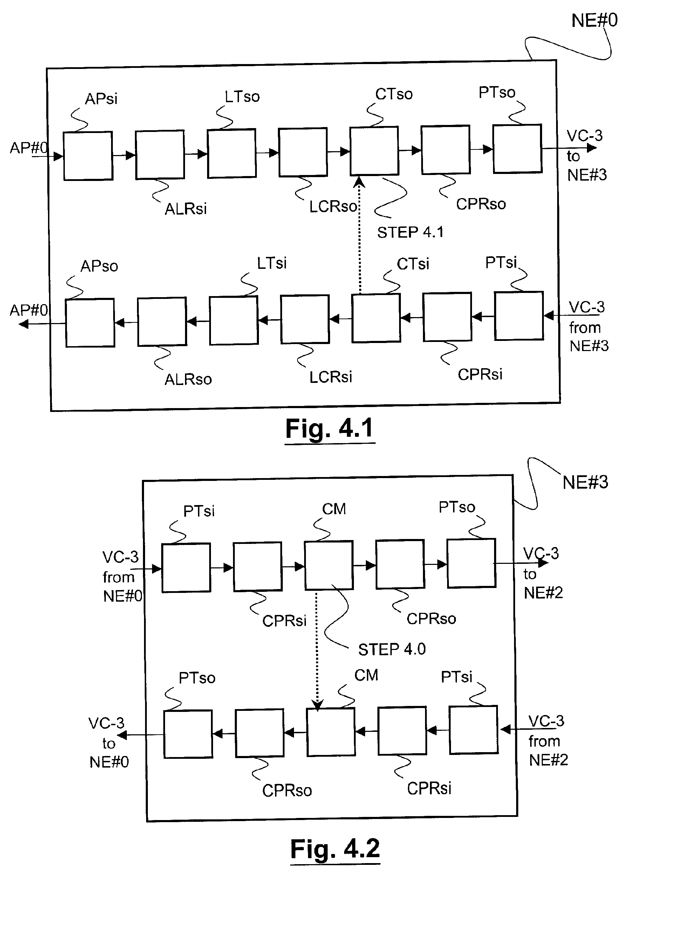

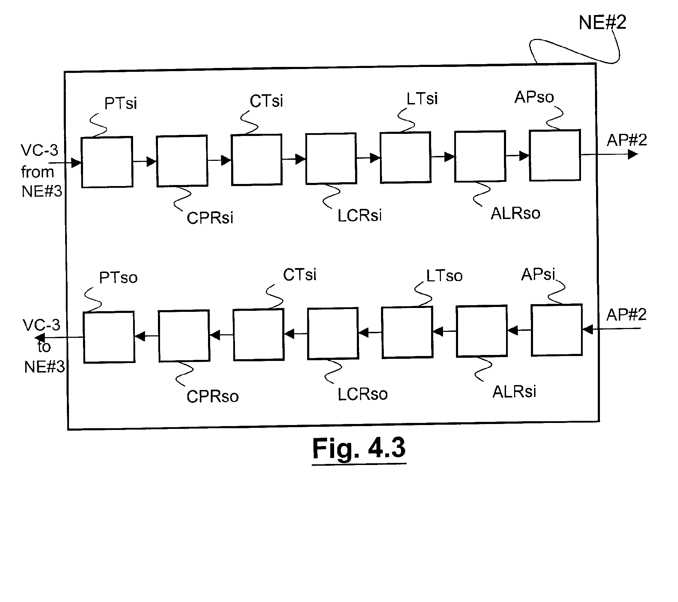

When (STEP 4.0, Fig. 4.2) the filling of CM queue (in NE#3) reaches a "danger" threshold, a Circuit Back-pressure Request is generated and transmitted to CTso block of NE #0. This leads to the disable of CTso transmission until the disappearance of the request itself (STEP 4.1, Fig. 4.1).

This event occurs when the filling of CM queue (in NE#3) falls under a "safety" threshold. This scenario is depicted in Figures 4.

The activation of flow control relating to the filling of CTsi (NE#2) can lead to the activation of flow control described for the filling of CM queue (NE#3); the stop of CM transmission could lead to a "dangerous" filling of CM queue itself and to a Request generation towards CTso block of NE#0.

Every couple of Circuit queues performs a basic flow control; the cascade of basic flow controls performs the overall Circuit flow control. The number of basic flow control is equal to the number of intermediate NEs increased by one.

As already stated, more than one Circuit can be associated to a Link. Fig. 1 depicts that the Circuit NE #0 - NE #1 - NE #2 (5 x VC-12) can be added to the above exemplifying Circuit (NE #0 - NE #3 - NE #2). Advantageously, the previously described flow control is performed for every Circuit in an independent way.

The Circuit flow control can be activated as a consequence of LTsi queue filling.

Let consider this queue is completely full; this event could occur when a Link Back-pressure Request has been generated but a huge amount of Ethernet frames was already stored in the Circuit queues.

LTsi block can not accept any further frame and this could lead the filling of CTsi queue to cross the "danger" threshold and to the generation of Circuit Back-pressure Request.

The Circuit flow control can interwork with pure Ethernet flow control as for the Link.

The disable of CTso transmission (as a consequence of a Circuit Back-pressure Request) could lead to the complete fill of the related queue.

When this event occurs no more frames can be accepted from LTso block and the filling of the related queue could reach the "danger" threshold with the related generation of PAUSE control frame as already stated for the Link example.

It is now clear that the flow control management in NETS model have the following peculiar features:
- Every Circuit has a dedicated flow control
- Every Link has a dedicated flow control
- Circuit and Link flow controls work in a concurrent and independent way although the filling of a Link queue could lead to Circuit flow control activation
- Both Circuit and Link control flow could activate the "pure" Ethernet flow control (i.e. PAUSE control frame).

In any case, the solution according to the present invention provides the flow-control of the Ethernet traffic over SDH network avoiding any traffic loss. Clearly, the above described flow control mechanism is useful in conditions without any faults but it is particularly advantageous when one or more failures occur in the network resulting in a reduction of resources. The fault management for the transport of Ethernet traffic over an SDH network will be disclosed below.

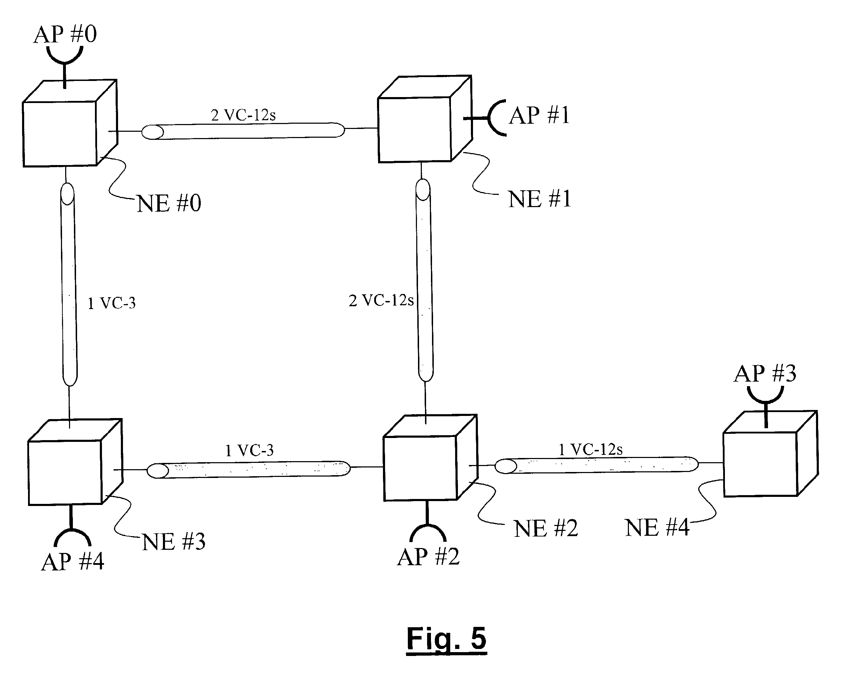

The solution is naturally still based on the NETS model. With reference to Fig. 5, two Circuits perform the point-to-point connection AP#0 - AP#2, Circuit A (VC-3 based) and Circuit B (2 x VC-12 based).

A sequence of two Pipes makes up every Circuit: two Pipes of 1 VC-3 each for Circuit A; and two Pipes of 2 x VC-12 each for Circuit B.

The VC-3 and VC-12 containers of all the Pipes correspond to the basic element of NETS model that is the Path.

A set of Virtual Containers can be concatenated to build a Pipe.

The 2 x VC-12 Pipe connecting NE #0 and NE #1 is used to transport Ethernet frames between the two Network Elements. As already said, if SDH Virtual Concatenation were adopted, every frame would be spread among all the concatenated Virtual Containers, i.e. all the VCs perform the transport of a frame. With the Packet Concatenation every frame is assigned to one Virtual Container only, i.e. the VCs perform the transport of different frames.

When a fault affects one VC of a Virtual Concatenation the traffic is completely lost because a part of every message is transported by that Concatenation.

According to the present invention, when a fault affects one VC of a Packet Concatenation, the traffic can be recovered by an "automatic" removal of the unavailable container. The proposed solution performs the "automatic" removal of resources not available anymore because affected by a fault.

According to the present invention, a Path is removed every time it is affected by a fault; a Pipe is removed when all the concatenated Paths have been removed in their turn; and a Circuit is removed when at least one Pipe has been removed.

How a Path/Pipe/Circuit can be automatically removed is described in the following; the same for the impact of a resource removal on the transport of Ethernet traffic over SDH network.

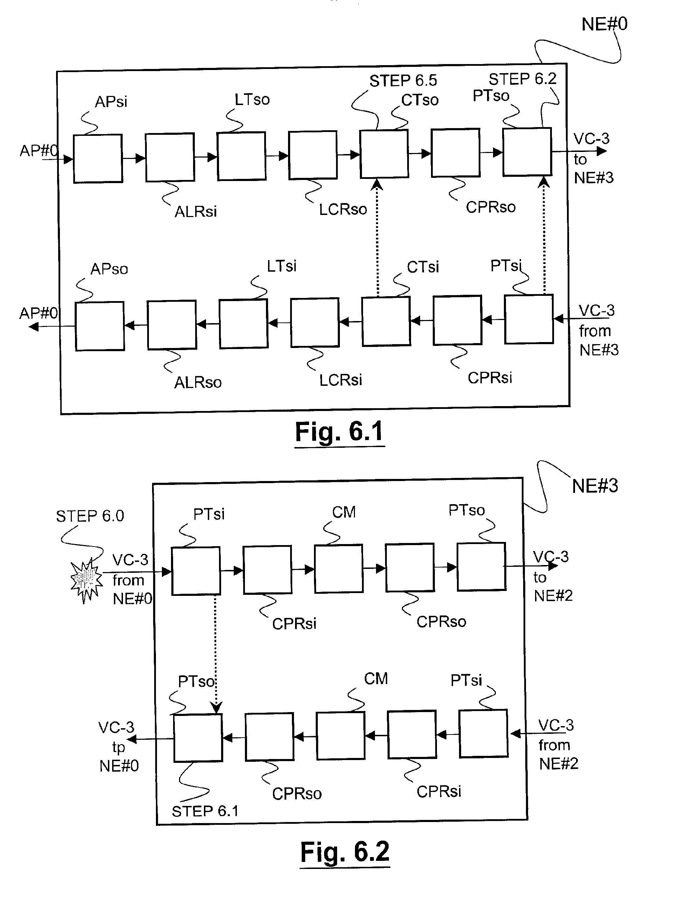

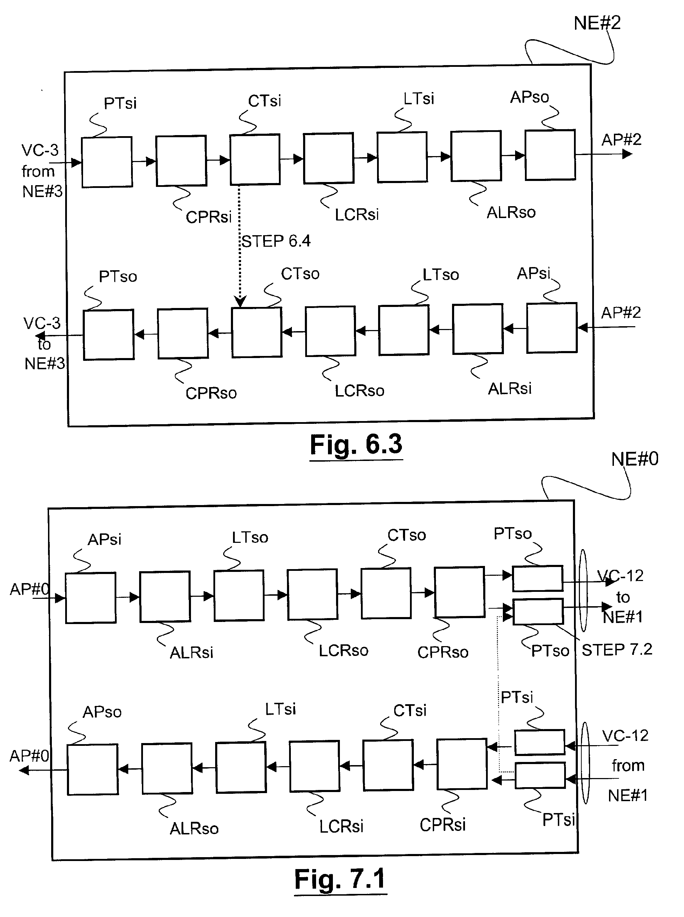

Figures 6 depict a detailed schematic of Circuit A

Let consider Circuit A and a fault affecting the VC-3 connecting NE #0 and NE #3 (STEP 6.0, Fig. 6.2). This fault is managed according to the following steps:
STEP 6.1, Fig. 6.2: PTsi block of NE #3 detects the fault and generates a Path Remote Defect Indication (RDI). PTso block of NE #3 transmits the Path RDI to NE #0 along the opposite direction respect to the fault (from NE #3 to NE #0); the RDI transmission is performed by means of dedicated Status Messages. Due to a Path is always considered a bi-directional entity the PTso block of NE #3 stops the transmission of Ethernet frames because the complete Path is declared unavailable.
STEP 6.2, Fig. 6.1: Upon reception of Path RDI also PTso block of NE #0 stops the transmission of Ethernet frames and declares the Path unavailable. After the declaration of Path unavailability the two NEs exchange only Status Messages by means of the selected VC-3.
STEP 6.3, Fig. 6.2: At Circuit level, CM block of NE #3 (NE #0 - NE #2 direction) does not receive neither Ethernet frames nor Status Messages due to the fault. After the detection of this condition CM generates an Alarm Indication Signal that is forwarded to NE #2.
STEP 6.4, Fig. 6.3: Upon reception of Circuit AIS, the CTsi block of NE#2 generates a Circuit RDI to be transmitted to NE #0 along the opposite direction (from NE #2 to NE #0). As for the Path the Circuit is a bi-directional entity and CTso block of NE #2 stops the transmission of Ethernet frames because the complete Circuit is declared unavailable.
STEP 6.5, Fig. 6.1: Upon reception of Circuit RDI, also CTso block of NE #0 stops the transmission of Ethernet frames and declares the Circuit unavailable. None Ethernet frame is transmitted along Circuit A until Path RDI and Circuit RDI are active; only status information are exchanged to continuously monitor the Path and Circuit status. After the fault removal the Path RDI disappears and the failed Path is declared available again. As a consequence, also the Circuit AIS and the Circuit RDI are removed and the failed Circuit is declared available again.

Here is the description of the previous scenario from the point of view of the complete point to point connection (AP #0 - AP #2):
1) At the beginning, Circuits A and B are active and the Ethernet frames received at AP #0 are dispatched to AP #2 along both of them.
2) When the failure occurs on the selected VC-3, the related Path and Circuit A are declared unavailable (some traffic is lost during this phase);
3) Circuit B continues to work in a regular way and the point to point connection is accomplished by means of this Circuit; a bandwidth reduction occurs due to the unavailability of Circuit A;
4) When the fault is removed, Circuit A is declared available again and the initial condition is restored. The restoration of Circuit A does not lead to any hit on the traffic because all its queues have been emptied during the unavailability time.

The NETS model foresees independent routes to accomplish a point to point connection; as a consequence the connection can be maintained although the occurrence of a fault that can affect one of them.

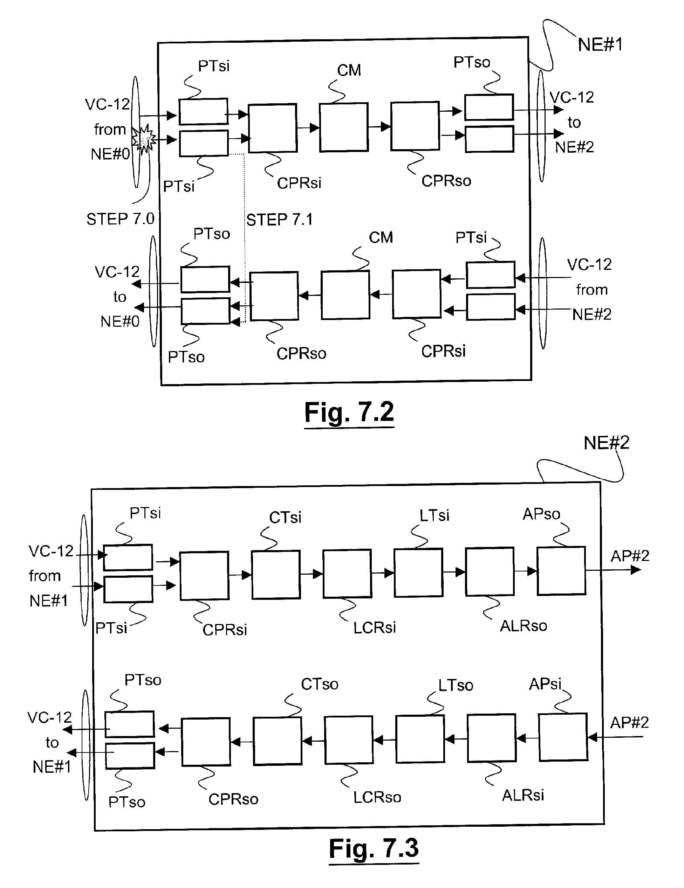

The following example related to Circuit B shows how a fault can affect the Packet Concatenation of two VC-12s. Let consider Circuit B and a fault affecting one VC-12 connecting NE #0 and NE #1 (STEP 7.0, Fig. 7.2). This fault is managed according to the following steps as described in Figures 7:
STEP 7.1, Fig. 7.2: PTsi block of NE #1 detects the fault and generates a Path Remote Defect Indication (RDI). PTso block of NE #1 transmits the Path RDI to NE #0 along the opposite direction respect to the fault (from NE #1 to NE #0); the RDI transmission is performed by means of dedicated Status Messages. Due to a Path is always considered a bi-directional entity the PTso block of NE #1 stops the transmission of Ethernet frames because the complete Path is declared unavailable.
STEP 7.2, Fig. 7.1: Upon reception of Path RDI also PTso block of NE #0 stops the transmission of Ethernet frames and declares the Path unavailable. After the declaration of Path unavailability the two NEs exchange only Status Messages by means of the selected VC-12. A Path of the Pipe connecting NE #0 and NE #1 is removed but the Pipe is always active although its bandwidth is reduced. Again when the fault occurs and the Path is removed some traffic is lost.

Nothing happens at Circuit level because the route is available with a reduced bandwidth as already stated. After the fault removal, the Path RDI disappears and the failed Path is declared available again.

Here is the description of the previous scenario from the point of view of the complete point to point connection (AP #0 - AP #2):
1) At the beginning Circuit A and B are active and the Ethernet frames received at AP #0 are dispatched to AP #2 along both of them.
2) When the failure occurs on the selected VC-12, the related Path is declared unavailable (some traffic is lost during this phase).
3) Both Circuits continues to work in a regular way; a bandwidth reduction occurs to the Pipe affected by the fault.
4) When the fault is removed the failed Path is declared available again and the initial condition is restored. The restoration of the Path does not lead to any hit on the traffic.

The previous example shows that, in addition to the independent Circuits, also the Packet Concatenation provides a protection against a fault.

As a matter of fact, the point-to-point connection can be maintained by Circuit B only although it is affected by a fault; just a bandwidth reduction of one Pipe occurs.

There have thus been shown and described a novel method and a novel network element which fulfill all the objects and advantages sought therefor. Many changes, modifications, variations and other uses and applications of the subject invention will, however, become apparent to those skilled in the art after considering the specification and the accompanying drawings which disclose preferred embodiments thereof. All such changes, modifications, variations and other uses and applications which do not depart from the spirit and scope of the invention are deemed to be covered by the invention which is limited only by the claims which follow.

## Claims

1. Method for providing flow control of Ethernet traffic that is transported through a pipe from a sending point (AP#0) to a receiving point (AP#1) over at least one SDH/SONET network, the at least one SDH/SONET network comprising network elements or nodes (NE# 0, NE#1,...NE#4), fiber connections connecting the network elements and SDH/SONET virtual containers (VC-X #), the transport being managed through a new layer over SDH/SONET network physical layer, the new layer comprising Access Points (AP #), links of Access Point pairs and circuits, namely the possible routes for connecting a pair of Access Points, the method being **characterized by** comprising:
at the network elements (NE#0, NE#2) that host the sending and receiving points (AP#0, AP#2), respectively, providing termination blocks (LTsi, LTso, CTsi, CTso) for storing queues of Ethernet frames,
when the filling of termination block (LTsi, CTsi) queue at the receiving node (NE#2) reaches a danger threshold, generating a Link Back-pressure Request and forwarding it to termination block (LTso, CTso) at the transmitting node (NE#0) along the opposite direction;
upon receipt of this request at the termination block (LTso, CTso) suspending the transmission of other already stored Ethernet frames by until the disappearance of the Link Back-pressure Request.

2. Method according to claim 1, **characterized by** further comprising the step of generating a PAUSE control frame when the filling of termination block (LTso, CTso) queue at the transmitting node (NE#0) reaches a danger threshold so that an equipment connected to the sending point (AP#0) stops Ethernet frame transmission for at least a certain time interval.

3. Method according to claim 1 or 2, **characterized in that** said termination blocks comprise Link termination blocks (LTsi, LTso) for providing a dedicated Link flow control.

4. Method according to claim 1 or 2, **characterized in that** said termination blocks comprise Circuit termination blocks (CTsi, CTso) for providing a dedicated Circuit flow control.

5. Method according to any of claims 1-4, **characterized in that** Circuit and Link flow controls operate in a concurrent and independent way although the filling of a Link queue could lead to Circuit flow control activation.

6. Method according to any of claims 1-5, **characterized in that** the flow control feature is activated in case at least one fail affects the SDH/SONET network resulting in a bandwidth reduction in the Pipe affected by the at least one fault.
